(19) Europäisches Patentamt
European Patent Office
Office européen des brevets

(11) **EP 3 940 647 A1**

(12) **EUROPEAN PATENT APPLICATION**

(43) Date of publication:
**19.01.2022 Bulletin 2022/03**

(51) International Patent Classification (IPC):
**G06T 11/00** (2006.01)

(21) Application number: **20185827.1**

(52) Cooperative Patent Classification (CPC):
**G06T 11/005**

(22) Date of filing: **14.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **KOEHLER, Thomas
5656 AE Eindhoven (NL)**
• **BRENDEL, Bernhard Johannes
5656 AE Eindhoven (NL)**
• **WUELKER, Christian
5656 AE Eindhoven (NL)**

(74) Representative: **Philips Intellectual Property &
Standards
High Tech Campus 52
5656 AG Eindhoven (NL)**

(54) **DEEP LEARNING FOR SLIDING WINDOW PHASE RETRIEVAL**

(57)     An image processing system (IPS) and related method for supporting tomographic imaging. The system comprises an input interface (IN) for receiving, for a given projection direction ($p_i$), a plurality of input projection images at different phase steps acquired by a tomographic X-ray imaging apparatus configured for dark-field and/or phase-contrast imaging. A machine learning component (MLC) processes the said plurality into output projection imagery that includes a dark-field projection image and/or a phase contrast projection image for the said given projection direction.

**FIG. 1**

**Description**

FIELD OF THE INVENTION

An image processing system for supporting tomographic imaging, a training data generation system, a computer-implemented method for supporting tomographic imaging, a computer-implemented method of generating training data, a computer program element, and a computer readable medium.

BACKGROUND OF THE INVENTION

Dark-field ("DF") computed tomography (CT), in short DF-CT, is an imaging modality in which, in addition to a conventional attenuation image, two other images are obtained, namely a phase contrast ("PC") image, which is related to the real part of the refractive index of the imaged object, and the dark-field image, which is related to the strength of ultra-small-angle scattering within the object.

It has been demonstrated in several pre-clinical studies that the dark-field signal contains valuable diagnostic information, in particular about the lung.

Some types of DF-CT scanners include a grating interferometer that is placed into the path of the X-ray beam to achieve the DF imaging capability.

However, artifacts have been observed to occur in reconstructed DF imagery. Whilst existing techniques such as described in Applicant's WO 2016/207423A1 have succeeded in reducing artifacts, some artifacts still remain.

SUMMARY OF THE INVENTION

There may therefore be a need for improving in particular CT-DF imaging.

The object of the present invention is solved by the subject matter of the independent claims where further embodiments are incorporated in the dependent claims. It should be noted that the following described aspect of the invention equally applies to the training data generation system, to the computer-implemented method for supporting tomographic imaging, to the computer-implemented method of generating training data, to the computer program element, and to the computer readable medium.

According to a first aspect of the invention there is provided an image processing system for supporting tomographic imaging, comprising:

an input interface for receiving, for a given projection direction, a plurality of input projection images at different phase steps acquired by a tomographic X-ray imaging apparatus configured for dark-field and/or phase-contrast imaging; and
a pre-trained machine learning component to process the said plurality into output projection imagery that includes a dark-field projection image and/or a phase-contrast projection image for the said given projection direction.

The proposed system allows further reducing image artifacts in reconstructed DF- and/or PC-imagery. The artifacts appear to be caused at least in parts by fluctuating reference data. The referenced data include in particular reference visibility and reference phase. Reference visibility and reference phase are properties of the interferometer. The reference data is needed in reconstruction algorithms to produce sectional images of the imaged object. The manner in which the reference data changes appears to be difficult to model analytically. The rotation of the scanner's X-ray source during image acquisition, but also ambient factors such as temperature, humidity etc. appear to cause some of the observed changes of the reference data. These changes lead to artifacts in the reconstructed imagery. With the proposed machine learning approach those changes can be better accounted for, thus leading to a reduction or elimination of those artifacts.

More specifically, the proposed image processor acts as a pre-processor to pre-processes the acquired (projection) raw data to obtain new projection imagery which may then be used in the reconstruction instead of the acquired projection raw data. The new projection images obtained in the pre-processing appear to better capture and disentangle the three contrast mechanisms from each other, namely attenuation, phase contrast, and ultra-small-angle scatter and the said disentanglement helps to eliminate reconstruction artifacts caused by the changes in the reference data. Preferably, for any given projection direction, there are three output projection images produced, one for each of the three contrasts mechanisms.

In embodiments, the input projection images at the different phase steps are acquired by the tomographic X-ray imaging apparatus at respective different projection directions associated with the given projection direction.

Whilst the output projection imagery computed by the machine learning component may be useful in their own right for teaching purposes or analysis, in embodiments, the system comprises a reconstructor configured to implement a reconstruction algorithm to reconstruct the output projection imagery in projection domain for a plurality of such given reference projection directions into reconstructed dark-field and/or phase contrast imagery in image domain.

In embodiments, the machine learning component has a neural network structure.

In embodiments, the neural network structure includes at least in parts a convolutional neural network structure.

In embodiments, the network includes at least one layer, the said at least one layer operable based on at least one 2D convolution filter.

In embodiments, the network includes a sequence of hidden layers each operable based on respective one or more convolution filters.

In embodiments, output(s) of the said sequence is/are combined by a combiner layer into the said output projection imagery.

In another aspect there is provided an image arrangement, comprising a system or any one of the above mentioned embodiments, and a tomographic imaging apparatus for acquiring the input projection data.

In another aspect there is provided a training system for training, based on training data, the machine learning component as used in any one of the above described embodiments.

In another aspect there is provided a training data generation system, configured to:

receive a first set of projection images of a sample body having known internal structures acquired from different projection directions by a tomographic imaging system configured for phase-contrast and/or dark-field imaging;

image-process imagery reconstructable from the first projection images based on knowledge of said structures to reduce artifacts,

forward project the image-processed imagery to obtain a second set of projection images, the first and second set forming training data.

In another aspect there is provided a computer-implemented image processing method for supporting tomographic imaging, comprising:

receiving, for a given projection direction, a plurality of input projection images at different phase steps acquired by a tomographic X-ray imaging apparatus configured for dark-field and/or phase-contrast imaging; and

processing, by a pre-trained machine learning component, the said plurality into output projection imagery that includes a dark-field projection image and/or a phase contrast projection image for the said mean projection direction.

In embodiments, the input projection images at the different phase steps are acquired by the tomographic X-ray imaging apparatus at respective different projection directions associated with the given projection direction.

In embodiments, the method comprises reconstructing the output projection imagery in projection domain for plural such given projection directions into reconstructed dark-field and/or phase contrast imagery in image domain.

In another aspect there is provided a computer-implemented training method for training the said machine learning component based on training data.

In another aspect there is provided a computer-implemented method of generating training data, comprising:

receiving a first set of projection images of a sample body having known internal structures acquired from different projection directions by a tomographic imaging system configured for phase-contrast and/or dark-field imaging;

image-processing imagery reconstructable from the first projection images based on knowledge of said structures to reduce artifacts; and

forward project the image-processed imagery to obtain a second set of projection images, the first and second set forming training data.

In another aspect there is provided a computer program element, which, when being executed by at least one processing unit, is adapted to cause the processing unit to perform the method as per any one of the above mentioned embodiments.

In another aspect still, there is provided a computer readable medium having stored thereon the program element.

Definitions

*"user"* relates to a person, such as medical personnel or other, operating the imaging apparatus or overseeing the imaging procedure. In other words, the user is in general not the patient.

*"object"* is used herein in the general sense to include animate "objects" such as a human patient or animal, or anatomic parts thereof, but also includes inanimate objects such as an item of baggage in security checks or a product in non-destructive testing. However, the proposed system will be discussed herein with main reference to the medical field, so we will be referring to the "object" as "the patient" and the region of interest ROI, being a particular anatomy or group of anatomies of the patient.

By *"phase retrieval (algorithm)"* is meant any algorithm based on signal models or otherwise that compute a phase signal in combination with a dark-field signal from measured raw data (i.e. intensities). Because of the mutual interplay between phase shift and the dark-field signal which results from small angle scattering, in phase retrieval algorithms both signals, dark-field and phase, are usually computed jointly. Although "phase retrieval" is an established name, it may also be referred to herein as a "dark-field signal retrieval". The phase retrieval operation may be facilitated by an imaging facilitator structure such as gratings, structured masks, coded aperture plates, crystals etc., or other at least partially radiation blocking structures with periodic or non-periodic sub-structures, that interact with the imaging X-ray beam to realize different measurements to so impose more constraints. This helps resolve ambiguities, or ill-posedness, otherwise inherent in phase retrieval.

In general, the *"machine learning component"* is a computerized arrangement that implements a machine learning ("ML") algorithm that is configured to perform a task. In an ML algorithm, task performance improves measurably after having provided the arrangement with more (new) training data. The task's performance may be measured by objective tests when feeding the system with test data. The task's performance may be defined in terms of a certain error rate to be achieved for the given test data. See for example, T. M. Mitchell, "Machine Learning", page 2, section 1.1, McGraw-Hill, 1997.

"2d", "3D", etc is shorthand for two-dimensional and three-dimensional, respectively.

BRIEF DESCRIPTION OF THE DRAWINGS

Exemplary embodiments of the invention will now be described with reference to the following drawings, which, unless stated otherwise, are not to scale, wherein:

Figure 1 shows a tomographic X-ray system configured for phase-contrast and/or dark-field imaging;
Figure 2A shows projection images obtained by a tomographic X-ray imaging system configured for dark-field and/or phase-contrast imaging;
Figure 2B shows a schematic side elevation for a scan path with different projection directions and corresponding projection images;
Figure 3 shows an architecture of an artificial neural network model;
Figure 4 shows a flow chart of a method for supporting tomographic dark-field and/or phase-contrast imaging;
Figure 5A shows a system for generating training data for training a machine learning model;
Figure 5B shows a training system for training a machine learning model based on training data;
Figure 6A shows a method for generating training data for training a machine learning model and;
Figure 6B shows a flow chart of a method for training a machine learning model.

DETAILED DESCRIPTION OF EMBODIMENTS

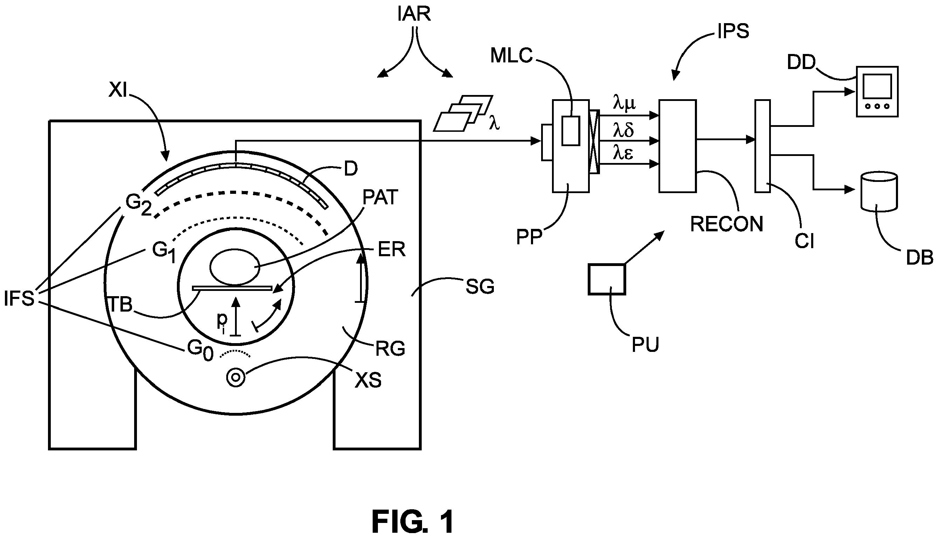

With reference to Figure 1 there is shown an imaging arrangement IA envisaged herein in embodiments.

The imaging arrangement IA includes an X-ray imaging apparatus XI that is configured to acquire projection raw data of an object PAT such as a human patient or animal.

The projection raw data acquired by the imaging apparatus XI may be processed by a computerized image processing system IPS to produce sectional imagery of object PAT. In more detail, the image processing system includes a reconstructor RECON and a projection image pre-processor PP (referred to herein as "the pre-processor"). The acquired projection raw data are pre-processed by the pre-processor PP to produce pre-processed projection imagery. The reconstructor RECON processes the pre-processed projection imagery into the section imagery, as will be explored more fully below.

The sectional imagery may be passed through a communication interface CI to be stored in memory DB, such as in a database system, and/or may be visualized by a visualizer (not shown) on a display device DD, or may be otherwise processed.

The imaging apparatus XI ("imager") envisaged herein is in particular of the X-ray based tomographic type. In this type of imaging, also referred to as rotational imaging, the projection raw data $\lambda$ are acquired of a ROI of patient PAT or of the patient as a whole, by exposing the patient to an X-ray beam. The projection raw data may then be pre-processed as will be explained more fully below, and then reconstructed by a reconstructor RECON into axial cross-sections - the said sectional images or "slices". The axial cross-sectional images may reveal information about internal structures of the ROI to allow examination and diagnosis by clinicians in line with clinical goals or objectives to be achieved. Particularly envisaged herein are X-ray based imagers, such as computed tomography (CT) scanners, or C-arm/U-arm imagers, mobile, or fixedly mounted in an operating theatre, etc. The imaging apparatus is configured for tomographic dark-field ("DF") CT imaging (DF-CT) and/or tomographic phase-contrast ("PC")-CT imaging (PCI-CT). The DF and/or PC- imagining capacity of the imager XI is facilitated by an imaging facilitator structure IFS that is arranged in the X-ray beam. The pre-processor PP helps reduce artifacts in reconstructed sectional DF and/or PC-imagery. Operation of the pre-processor PP will be explored in more detail further below.

The imager XI includes an X-ray source XS and an X-ray sensitive detector D. The detector includes a plurality of X-ray sensitive (detector) pixels. The imager XI may be configured for energy integrating imaging or for spectral imaging (also referred to as energy discriminating imaging). Accordingly, the detector D may be of the energy integrating-type, or of the energy discriminating type, such as a photon-counting detector.

During image acquisition, patient PAT resides in an examination region ER between the source XS and detector D. In embodiments, the source X-ray moves in an imaging orbit or scan path in a rotation plane around an imaging axis. Helical scan paths are also envisaged. The rotation may be achieved by having imager XI include a stationary gantry FG and a rotating gantry MG. The rotating gantry MG is rotatably supported by the stationary gantry FG. The rotating gantry MG rotates around the examination region ER and at least a portion of subject PAT therein, and about an imaging axis. The radiation source XS, such as an X-ray tube, is supported by and rotates with the rotating gantry MG around the examination region ER. The imaging axis passes through the ROI. Preferably, the patient's longitudinal axis is aligned with the imaging axis, but other arrangements and geometries are also envisaged. For example, in some embodiments, the patient is standing, with the X-ray source rotating around the patient's (now upright) longitudinal axis.

During the rotation, the source XS emanates the X-ray beam, and irradiates the ROI. During the rotation, the projection raw data are acquired at the detector D from different projection direction $p_i$. The X-ray beam passes along the different directions through the patient PAT, particularly through the ROI. The X-ray beam interacts with matter in the region of interest. The interaction causes the beam to be modified. Modified radiation emerges at the far end of the patient and then impinges on the X-ray sensitive detector D. Circuitry in the detector converts the impinging modified radiation into electrical signals. The electrical signals may then be amplified or otherwise conditioned and are then digitized to obtain (digital) projection raw data $\lambda$. The projection raw data $\lambda$ may then be pre-processed by the pre-processor PP, and is then reconstructed into the axial sectional DF or PC-imagery by a reconstructor RECON.

The re-constructor RECON is a computer implemented module that runs a reconstruction algorithm, such as FBP (filtered back-projection), Fourier-domain based reconstruction algorithms, algebraic (ART) reconstruction algorithm, or iterative reconstruction algorithms. The reconstruction algorithm is adapted to the imaging geometry used. In embodiments, a cone-beam reconstruction algorithm is used. In embodiments, the reconstruction algorithm is adapted for helical scan paths. The reconstruction algorithm is adapted for DF-CT and/or PCI-CT imaging, as will be explored in more detail below.

The reconstructor RECON module may be arranged in hardware or software or both. The reconstructor RECON transforms the projection raw data $\lambda$ acquired in the projection domain of the detector D into the axial sectional imagery in image domain. Image domain includes the portion of space in the examination region where the patient resides during imaging. In contrast, the projection domain is located in an X-ray radiation sensitive surface or layer of the X-ray detector D. In the image domain, the reconstructed imagery may be defined in cross sectional planes parallel to the rotation plane(s) of the orbit and perpendicular to the imaging axis. Different axial images in different cross sectional planes can be acquired, that together form a 3D image volume, i.e., a 3D image representation of the ROI. The 3D volume may be acquired by advancing the support table TB on which patient PAT resides during imaging, such as in a helical scan path. Alternatively, or in addition, it is the stationary gantry FG that is translated. The relative translational motion of patient PAT versus source XS along the imaging axis, and the rotation of source XS around said imaging axis give rise to the helical scan path at a certain pitch. The pitch may be fixed or is user adjustable. In non-helical scans, the scan path in general subtends an arc of at least, or substantially equal to, 180° (plus fan angle).

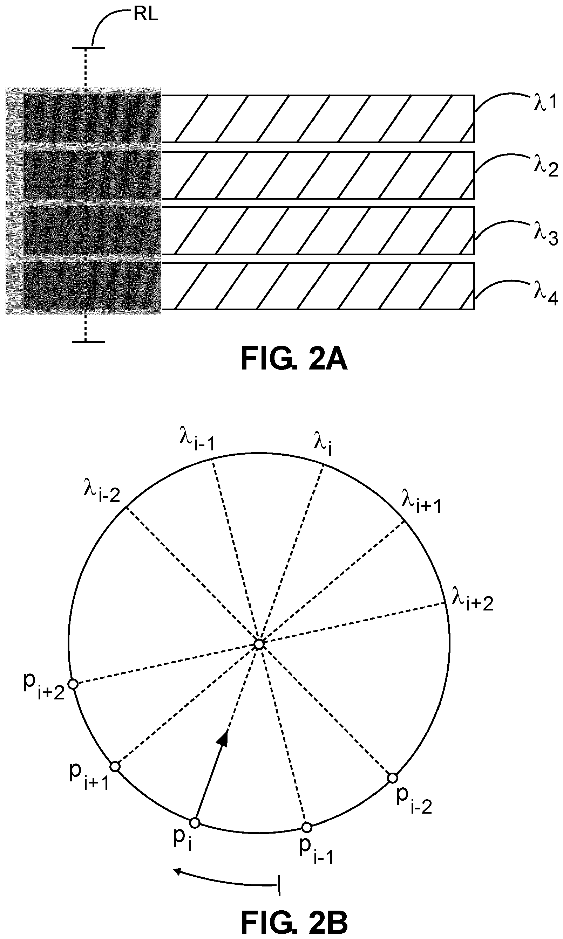

The projection raw data $\lambda$ as acquired in the scan comprises a number of different projection raw images, or "frames", as shown in Fig 2A. In particular, and as schematically shown in Figure 2B, to each position $p_i$ of the source XS on the scan path corresponds an associated projection frame $\lambda_i$ associated with that position and hence projection direction $p_i$.

Generally, when X-radiation interacts with material, it experiences both attenuation and refraction, The refraction results in a phase change. The attenuation on the other hand can be broken down into attenuation that stems from photo-electric absorption and attenuation that comes from scatter. The scatter contribution in turn can be decomposed into Compton scattering and Rayleigh scattering. For present purposes of dark-field imaging it is the small angle scattering that is of interest, where "small angle" means that the scatter angle is so small that the scattered photon still reaches the same detector pixel as it would have reached without being scattered.

As such, the original projection raw data $\lambda$ records a combination of contributions of the above-mentioned contrast mechanism of attenuation, refraction, and small-angle scattering. The pre-processing is configured to isolate the two contrast mechanisms of main interest herein, the phase-contrast and the dark-field contribution, from the combined contribution as recorded in the projection raw data $\lambda$.

In the proposed system IPS, it is not the measured raw data λ themselves that are used in the reconstruction, but instead suitably prep-processed projection imagery λ', produced by the projection image pre-processor PP from the measured raw data λ. After providing more details on the imaging procedure, operation of the pre-processor PP will be explained in more detail further below.

Turning now first in more detail to the above mentioned imaging facilitator structure IFS, this is arranged in the X-ray beam to facilitate phase/DF retrieval by the reconstructor RECON. More specifically, the imaging facilitator structure IFS ensures that refraction and small-angle scattering have an influence on the detected raw data so that the subsequent reconstructor RECON can create a PC and/or DF image. In general, the image facilitator structure IFS allows acquiring multiple measurements for a given projection direction $p_i$ so as to be able to resolve the intensity measurements into phase and/or dark-field information. The process of acquiring those multiple measurements is sometimes referred to as "phase stepping". Again, we shall retain this terminology herein for historical reasons, with the understanding that herein the phase stepping is an operation to further in addition or instead, DF imaging and not (only) phase contrast imaging.

In some embodiments, but not all embodiments, the imaging facilitator structure IFS is an arrangement of gratings. Specifically, and in some such embodiments, the imaging facilitator structure IFS is arranged as an interferometer, in the form of one, two, or three grating structures as shown in Figure 1. The multiple measurements may be acquired in a phase stepping operation. Fig 1 shows one configuration of an interferometer with three gratings G0-G2, with G0, G2 being absorber gratings and G1 being a phase grating. The grating G0 is optional and may not be required in case source XS natively provides radiation of sufficient coherency. The grating G1 may be placed (relative to the source XS) in front of (not shown) or behind (as shown) the patient. Based on the mean wavelength of the radiation used, the inter-gratings distances and the distances of the gratings from the source XS are so tuned that a diffraction fringe pattern is recordable at the detector D. The fringe pattern encodes in particular the sought after DF and PC information.

The phase stepping operation may be active or passive, or both. Active embodiments include mechanisms, such as control circuitry and hardware of the imager XI, operable to induce phase stepping for each projection direction $p_i$, for instance by scanning one of the gratings past the X-ray beam, or by changing source XS's focal spot position, etc. Passive phase stepping embodiments use the CT scanning rotation of the source XS itself in combination with grating movement induced by vibrations caused by the rotation. Passive phase stepping does not require additional control circuitry and/or hardware.

Figure 2B is an illustration in particular of passive phase stepping envisaged herein for rotational imagers XI. For any given projection direction $p_i$, which may be referred to herein as a momentary current direction, earlier projection raw data $\lambda_{i-2}$, $\lambda_{i-1}$ acquired at other projection directions, for instance $p_{i-2}$, pi-i, are aggregated with projection raw data $\lambda_i$ of the current reference direction $p_i$, and/or with one or more later projection raw data $\lambda_{i+1}$, $\lambda_{i+2}$ acquired at later $p_{i+1}$, $p_{i+2}$, projection directions to form a phase stepping group for reference direction $p_i$. In the example shown in Figure 2B, the phase stepping group comprises five projection images for the reference direction $p_i$. The phase stepping group comprises the image for the reference direction, two earlier and two later projection images. "Earlier" and "later" refers herein to the rotation direction. Because of the grating movements caused by the vibrations, each frame in the group represents a measurement differently affected by the grating movements, the group thus constituting phase stepping measurements.

In the example of 2B, it is earlier and later projection images that together with the current projection image form the phase stepping group. The phase stepping group in the embodiment of Figure 2B is hence centered round the current reference projection direction $p_i$. However, such centered phase stepping groups are not necessarily required herein. The phase stepping group may be otherwise defined. For example, the phase stepping group may be formed from projection raw frames acquired at one or more earlier directions $pj, j<i$, including the given direction $p_i$, or may be formed from projection raw frames acquired at one or more later directions $p_1, l>i$, including the given direction $p_i$. Such phase stepping groups may be referred to herein as a trailing phase stepping group and an ahead phase stepping group, respectively. Other aggregation types for forming a phase stepping group for a given projection direction may also be envisaged herein. The phase stepping group includes at least two, better 3, 4, 5 or more raw projection frames. In general, a phase stepping group for a given projection direction $p_i$ will be referred to herein on occasion as $\Lambda^i = \{..., \lambda_j, \lambda_i, \lambda_l, ...\}, j<i<l$. Each projection direction covered by the rotation gives rise to a different phase stepping group. A plurality of such phase stepping groups can thus be defined, and any given projection direction covered in the scan is associable with "its own", respective phase stepping group.

In the reconstruction algorithm, for each given projection direction, the projection images from the respective phase stepping group are pre-processed together to form the pre-processed projection data which are then used to reconstruct the phase-contrast and/or the dark-field sectional image. The reference line RL in Figure 2A illustrates the different phases of the fringe pattern as recorded in the projection raw data in one phase stepping group.

One type of reconstruction algorithm as used herein is iterative, although non-iterative, analytic, reconstruction algorithms are also envisaged herein, such as FBP and others. However, turning now first to the iterative reconstruction algorithms, these include in particular a forward projector. The forward projector describes how the three contrast mechanisms of interest herein interact together and map from image domain into projection domain.

In iterative CT image reconstruction, the image domain is populated, in each iteration cycle, with tentative image values placed in a grid of voxel positions. The forward projection produces synthesized projections based on the said values currently placed at the voxel grids. Unlike in the proposed system, in previous reconstruction approaches the so synthesized projections are compared with the actually acquired projection raw data $\lambda$. There is usually a mismatch which is quantified by a cost function. The values in image domain are updated iteratively by an up-dater, so as to improve the cost function and hence reduce the residue between the measured projections, and the synthesized projections as per the forward model:

$$(\hat{\mu}, \hat{\delta}, \hat{\varepsilon}) = argmin_{\mu, \delta, \varepsilon} \Delta(\mu, \delta, \varepsilon) \qquad (1a)$$

$$\Delta = \| \lambda - \Pi(\mu, \delta, \varepsilon; I^0, \phi^0, V^0) \|^2 \qquad (1b)$$

$$(\mu_{i+1}, \delta_{i+1}, \varepsilon_{i+1}) = P(\mu_i, \delta_i, \varepsilon_i) \qquad (1c)$$

wherein:

$\hat{\mu}, \hat{\delta}, \hat{\varepsilon}$ is the reconstructed sectional imagery

$\lambda$ are the measured intensity raw data

$\Pi$ is the forward projector producing synthesized intensity projections $P$ an updater function configured to improve $\Delta$.

As indicated above at (1b), the reconstruction algorithm uses reference data $I^0$, $\phi^0$, $V^0$. Reference data is also used in non-iterative reconstruction schemes such as FBP. The reference data relates to measurements obtained in a calibration operation, an "air scan", and includes in particular reference visibility $V^0$ and reference phase $\phi^0$ of the fringe pattern recordable without there being an object OB in the examination region ($I^0$ refers to the reference attenuation and is not considered herein further). The reference data describe a reference fringe pattern recordable at the detector in the air scan. When an object is introduced into a beam during imaging, a new fringe pattern is recordable which may be understood as a disturbed, deviated, version of the reference pattern. It is this deviation that is harvested by the reconstruction algorithms to reconstruct the sought after imagery PC and/or DF imagery $\tilde{\delta}, \tilde{\varepsilon}$.

Whilst the system vibrations are usefully leveraged herein in some embodiments for phase stepping as described above, the said vibrations have also undesirable effects. More specifically, in traditional dark-field and phase-contrast reconstruction, it is usually assumed that the reference phase and reference visibility as included in the reference data is constant from "view to view", that is, from projection direction $p_i$ to another projection direction $p_j$. This assumption has proved to be wrong. The reference data may indeed change with projection direction. If this change is unaccounted for in the modelling (1a), this may lead to image artifacts. In one approach as described in applicant's WO 2016/207423 an attempt was made to include the reference phase as an additional fitting variable. Other approaches have attempted to model the phase reference fluctuation by more complex functions, such as polynomials etc.

It appears that the fluctuation of the phase reference, and also of the reference visibility, is the result of the rotation of the X-ray source which induces vibrations. Ambient factors, such as temperature changes, changes in humidity etc. may also affect the gratings of the interferometer IFS which are delicate structures.

The upshot of all this is that it appears difficult to model the changes of reference phase and/or visibility analytically.

It is therefore proposed herein to eliminate image artifacts caused by an unknown variation of the reference phase and reference visibility. This is achieved by the proposed projection image pre-processor PP. The projection image pre-processor PP receives as input the acquired projection raw data $\lambda$ for a given phase stepping group, and processes these into preferably three pre-processed projection images $\lambda_\mu, \lambda_\delta, \lambda_\varepsilon$, one for each contrast mechanism. Each of the pre-processed projection images now records information of the respective contrast mechanism, in isolation from the other two, or at least with negligible contribution from the other two contrast mechanisms. The pre-processed projection images $\lambda_\mu, \lambda_\delta, \lambda_\varepsilon$ represent approximations where the disturbing effects of phase reference and visibility fluctuations have been accounted for. The information on the fluctuations that had earlier evaded analytic representation is now encoded in the image information as per the pre-processed projection imagery $\lambda_\mu, \lambda_\delta, \lambda_\varepsilon$. Because of the disentanglement of the three contrast mechanisms into the three respective pre-processed projection images $\lambda_\mu, \lambda_\delta, \lambda_\varepsilon$, the artifacts caused by the changes in the reference data can be reduced or even entirely eliminated.

More particularly, rather than attempting to map out the reference data fluctuation by classical analytical methods, a machine learning approach is proposed herein. More particularly still, the projection pre-processor PP includes a machine learning component MLC, pre-trained based on training data. The projection image pre-processor PP uses its machine learning component MLC to transform the acquired projection raw data $\lambda$ per phase stepping group into the pre-processed projection imagery $\lambda_\mu, \lambda_\delta, \lambda_\varepsilon$. The reconstructor RECON may then use the so transformed pre-processed projection imagery $(\lambda_\mu, \lambda_\delta, \lambda_\varepsilon) = \lambda'$, instead of the originally measured projection raw data $\lambda$, to reconstruct artifact free, or at least artifact reduced, sectional images. The phase retrieval in the proposed image processing IPS, can thus be seen herein to arise in the pre-processing of the raw data $\lambda$ into the new projection images $\lambda_\mu, \lambda_\delta, \lambda_\varepsilon$.

The computed improved projections $(\lambda_\mu, \lambda_\delta, \lambda_\varepsilon)$ are now better approximations for the line integrals $\int_{L_{ij}} \mu \, dl$, $\partial_x \int_{Lij} \delta \, dl$, and $\int_{Lij} \varepsilon \, dl$, respectively, with $L_{ij}$ indicating the respective line between source focal spot for projection position $p_i$ and detector pixel $j$. The processed projections $(\lambda_\mu, \lambda_\delta, \lambda_\varepsilon)$ allow definition of simplified and dis-entangled forward projections:

$$\lambda_\mu(i,j) = \Pi_{i,j}(\mu) = \int_{L_{ij}} \mu \, dl \qquad (2a)$$

$$\lambda_\varepsilon(i,j) = \Pi_{i,j}(\varepsilon) = \int_{L_{ij}} \varepsilon \, dl \qquad (2b)$$

$$\lambda_\delta(i,j) = \Pi'_{i,j}(\delta) = \partial_x \int_{L_{ij}} \delta \, dl \qquad (2c)$$

The pre-processed projections $(\lambda_\mu, \lambda_\delta, \lambda_\varepsilon)$ may be used in separate iterative 1-channel reconstruction algorithms, for one of $\lambda_\delta, \lambda_\varepsilon$. Alternatively, even classical-analytical reconstructions such as FBP can benefit where $\lambda_\delta$ or $\lambda_\varepsilon$ is used. "Channel" as used herein refers to either one of the contrast mechanism attenuation, DF and PC. If an algorithm or model accounts for all three of attenuation, DF and PC, it is said to have three channels, or, accordingly, two channels or one channel, if only both of DF and PC is computed, or only DF or PC is computed, respectively.

The pre-processed attenuation projections $\lambda_\mu$, whilst of less interest herein, may still be used with benefit herein as a third (or second) channel when reconstructing for DF and/or PC sectional imagery. This is because jointly running the reconstruction for the attenuation channel based on $\lambda_\mu$ alongside the other one, or preferably two, projections $\lambda_\delta, \lambda_\varepsilon$ may make the reconstruction more stable. The reconstruction may converge quicker to realistic solutions. The attenuation projections $\lambda_\mu$, or more specifically, the attenuation image $\mu$ act as a source of regularization.

The machine learning model component MLC is based on a machine learning model M. In embodiments, a convolutional neural network ("CNN") is used for this. The model M may be trained by a computerized training system TS. In the training, the training system TS adapts an initial set of (model) parameters $\theta$ of the model M. The training data may be generated by a training data generator system TDG. Two processing phases may thus be defined in relation to the machine learning model M: a training phase and a deployment phase. In training phase, prior to deployment phase, the model is trained by adapting its parameters. Once trained, the model may be used in deployment phase to transform projection raw data (that are not from the training data) into the disentangled pre-processed projection imagery for any given patient PAT during clinical use. The training may be a one off operation, or may repeated with new training data. The above mentioned components will now be described in more detail.

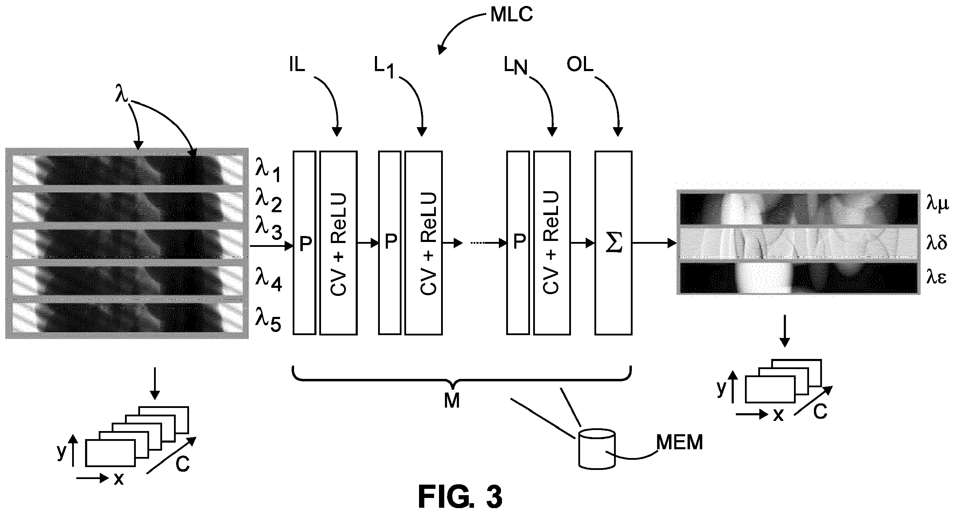

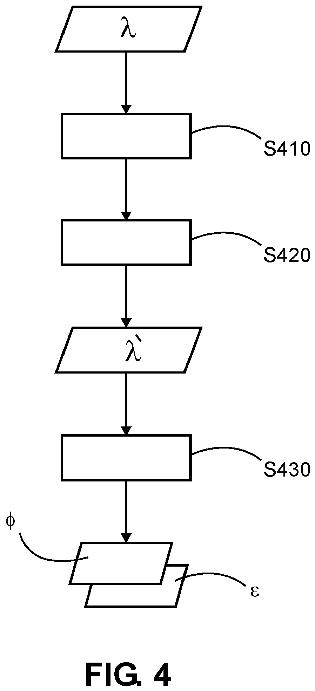

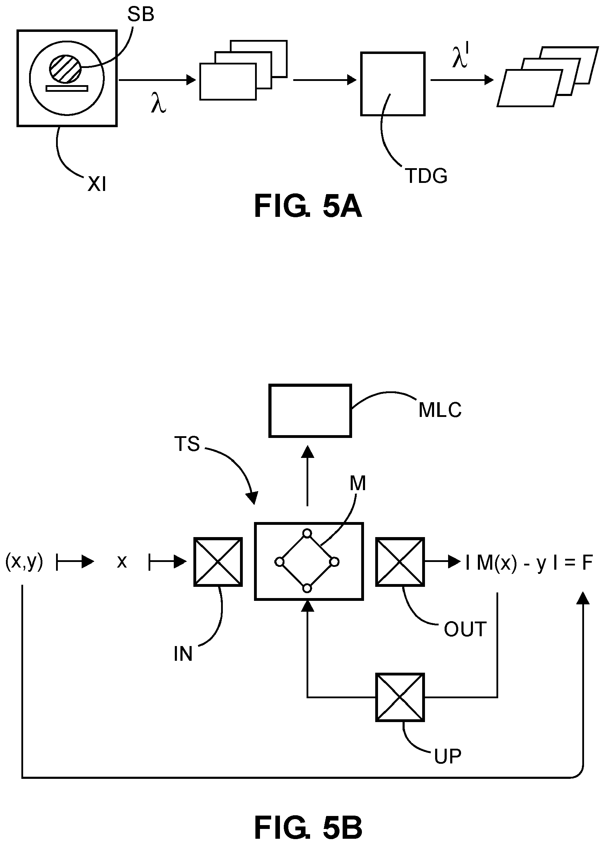

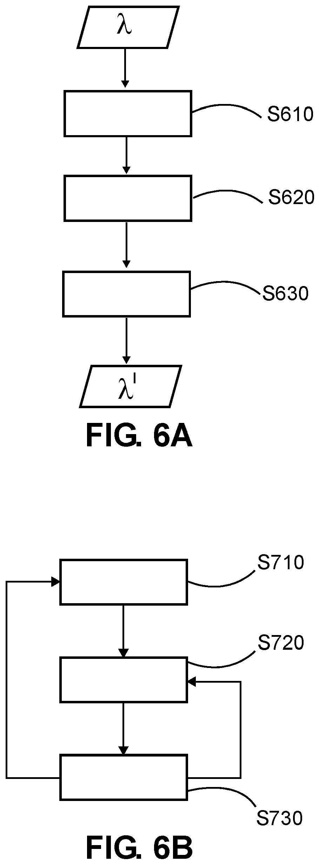

Turning now first to Figure 3, this shows an exemplary embodiment of a machine learning model as envisaged herein, stored in a computer memory MEM. The projection image pre-processor PP, and hence the pre-trained machine learning component MLC, may be run on a computing device PU, such as a desktop computer, a workstation, a laptop, etc. Preferably, to achieve good throughput, the computing device PU includes one or more processors (CPU) that support parallel computing, such as those of multi-core design. In one embodiment, GPU(s) (graphical processing units) are used. In Figures 3,4, it is assumed the model M has already been pre-trained, turning to aspects of training and training data generation later at Figs 5,6.

Referring now in more detail to Figure 3, this shows a convolutional neural network M in a feed-forward architecture. The network M comprises a plurality of computational nodes arranged in layers in a cascaded fashion, with data flow proceeding from left to right and thus from layer to layer. Recurrent networks are not excluded herein.

In deployment, input raw data such as a phase stepping group comprising five projection images $\lambda_1$-$\lambda_5$ is received at the input layer IL. The input raw data $\lambda$ is fed into model M at input layer IL, then propagates through a sequence of hidden layers L1-L3 (only three are shown, but there may be one or two, or more than three), to then emerge at an output layer OL. The output includes the three pre-processed projection images, each capturing only the respective contributions for attenuation, differential phase-contrast, and dark-field signals, indicated in Figure 3 as $\lambda_\mu, \lambda_\delta$ and $\lambda_\varepsilon$. The network M may be said to have a deep architecture because it has more than one hidden layers. In a feed-forward network, the "depth" is the number of hidden layers between input layer IL and output layer OL, whilst in recurrent networks the depth is the number of hidden layers times the number of passes.

The network M is preferably arranged as a multi-channel system where the input raw data $\lambda$ is arranged in multiple channels one for each projection direction $p_{i,}$ in this case five, of the phase stepping group. The layers of the network, and indeed the input and output imagery, and the input and output between hidden layers (referred to herein as feature maps), can be represented as two or higher dimensional matrices ("tensors") for computational and memory allocation efficiency. For the input raw data, dimensions X, Y correspond to pixel information, whilst the channel depth C corresponds to the size of the phase stepping groups (in this example five, but this is exemplary, and not limiting herein in any way). The number of projection directions per phase stepping group could be less than 5 such as three although having at least 3 or more projection images per group is preferred. The input imagery $\lambda_{1-5}$ forms a 3D-dimensional matrix, with depth N equal to the size $C$ of the phase stepping group. The matrix size $X \times Y \times C$ of the input layer IL equals that of the input phase stepping group of raw data $\lambda_{1-5}$.

Preferably, the hidden layers include a sequence of convolutional layers, represented herein as layers $L_1$ - $L_{N-k, k>1}$. The number of convolutional layers is at least one, such as 3 or 5 or any other number. The number may run into double-digit figures.

In embodiments, downstream of the sequence of convolutional layers there may be one or more fully connected layers but this is not necessarily the case in all embodiments and indeed preferably no fully connected layer is used in the architecture envisaged herein in embodiments.

Each hidden $L_m$ layer and the input layer IL implements one or more convolutional operators CV. Each layer $L_m$ may implement the same number of convolution operators CV or the number may differ for some or all layers.

A convolutional operator CV implements a convolutional operation to be performed on its respective input. The convolutional operator may be conceptualized as a convolutional kernel. It may be implemented as a matrix including entries that form filter elements referred to herein as weights θ. It is in particular these weights that are adjusted in the learning phase. The first layer IL processes, by way of its one or more convolutional operators, the input raw data $\lambda_1$-$\lambda_5$ in each channel separately to produce respective feature maps for each convolutional operator per channel. Feature maps are the outputs of convolutional layers, one feature map for each convolutional operator in a layer and for a given channel. The feature map of an earlier layer is then input into the next layer to produce feature maps of a higher generation, and so forth until the last layer OL combines all feature maps into the three pre-processed images $\lambda_{\mu}$, $\lambda_{\delta}$ and $\lambda_{\varepsilon}$ in the correct dimension. Alternatively, it may be possible to configure the network M to produce only a 2-channel output $\lambda_{\delta,}$ $\lambda_{\varepsilon,}$ or indeed a 1-channel output $\lambda_{\delta}$ or $\lambda_{\varepsilon}$, depending on the way the pre-processed data are to be used in the subsequent reconstruction via reconstructor RECON.

The convolutional operators in the hidden layers are preferably two dimensional so no cross-channel convolution is used in between the hidden layers. This helps better isolating and separating the two (DF and PC) or all three contrast mechanisms. However, as said, the last layer OL operates as a dimension reducer to aggregate all feature maps produced in the hidden layers into the correct dimensions. This is achieved in an embodiment by linearly combining across the channels of the respective feature maps. The 2D convolutions in the hidden layers with linear combination across feature maps at output layer IL allows more efficient processing and still rich enough modelling, as opposed to 3D convolutions in hidden layers. Whilst 3D convolutions are not excluded herein, they would incur higher computational overhead.

A convolutional operator in a convolutional layer is distinguished from a fully connected layer in that an entry in the output feature map of a convolutional layer is not a combination of all nodes received as input of that layer. In other words, the convolutional kernel is only applied to sub-sets of the input raw data $\lambda$, or to the feature map as received from an earlier convolutional layer. The sub-sets are different for each entry in the output feature map. The operation of the convolution operator can thus be conceptualized as a "sliding" over the input, akin to a discrete filter kernel in a classical convolution operation known from classical signal processing. Hence the naming "convolutional layer". In a fully connected layer an output node is general obtained by processing all nodes of the input layer.

The stride of the convolutional operators can be chosen as one or greater than one. The stride defines how the sub-sets are chosen. A stride greater than one reduces the dimension of the feature map relative to the dimension of the input in that layer. A stride of one is preferred herein. In order to maintain the dimensioning of the feature maps to correspond to the dimension of the input imagery, a zero padding layer P is applied. This allows convolving even feature map entries situated at the edge of the processed feature map.

Some or each convolutional filter in some or each layer $L_m$ may be combined with a non-linearity inducing layer, such as a RELU (rectified linear unit) operator as shown in Figure 3. The RELU layer applies a non-linear function, $f(z)$ = $max(z, 0)$ to the output feature maps received from the respective convolutional filter kernels CV. The RELU layers adds a non-linear component to the network M. Other nonlinearity operators may be used instead, such as the sigmoid function or the *tanh*-function, or others still.

Other layers than the ones shown can be combined with the convolutional layers in any combination, including max-pooling layers, drop-out layers and others, or such other layers may be used instead.

The totality of the weights for all convolutional filter kernels of the model M define a configuration of the machine learning model. It is these weights that are learned in a training phase. Once the training phase has concluded, the fully learned weights, together with the architecture in which the nodes are arranged, can be stored in memory MEM and can be used for deployment. In deployment phase, newly acquired projection raw data, not forming part of the training set, can then be fed into the input layer so as to obtain an estimate for the three pre-processed projections ($\lambda_\mu$, $\lambda_\delta$, $\lambda_\varepsilon$) at output lay OL.

Functionally, operation of the machine learning model M as used herein is a regression, and models other than CNN, indeed other than NN altogether, may also be used instead herein, such statistical regression models that can account for training data.

As mentioned earlier, depending on the forward model used in the reconstruction, in embodiments the ML model M may be configured to output two projections images for the DF and PC contribution, without the attenuation projection image. Single channel outputs with a projection output for either the DF or the PC are also envisaged in alternate embodiments.

The training aspects of the machine learning model M will be explained further below at Figures 5 and 6. The training may be a one-off operation or the previously trained model may be trained further when new training data becomes available.

Turning now first to Figure 4, this shows a flow chart of a method of supporting tomographic dark-field or phase-contrast imaging. The proposed method may implement the steps performed by the projection image pre-processor PP, but the method described in the following may also be understood as a teaching in its own right.

At step S410, projection images are obtained by a tomographic X-ray system configured for phase-contrast and/or dark-field imaging. Preferably, but not necessarily, in the proposed system, the rotation of the X-ray source is used as a passive phase stepping mechanism.

For some or each given projection direction, a group of projection raw data is associated to form the above described phase stepping group. For each given projection direction, its phase stepping group of projection raw data is processed at step S420 by a pre-trained machine learning algorithm to produce in embodiments three estimated pre-processed projections image: one for phase-contrast, one for the dark-field, and one for attenuation. In the three output pre-processed projection images, the effects of fluctuations in reference visibility and/or reference phase have been eliminated. In addition, information encoded into the three projection images so produced is resolved and separated into phase-contrast, attenuation and/or dark-field contrast, respectively. In embodiments not all three pre-processed projection images are produced per any given direction, but only one or two, namely for the phase-contrast and/or the dark-field signal, as required.

At step S430 the pre-processed projection imagery ($\lambda_\mu$, $\lambda_\delta$, $\lambda_\varepsilon$) is then reconstructed by a single-channel, a multi-channel or an FBP reconstruction algorithm into phase-contrast $\delta$ and/or dark-field $\varepsilon$ sectional images in image domain, which may then be made available for display, storage or other processing.

Providing now further details on the training aspects of the machine learning model, reference is first made to Figure 5A which shows a computerized system TDG for generating training data which can be used to train the machine learning model M as described above. In the following we use the same notation for the training data as has been introduced above. The computerized training data generator TDG may be implemented as follows: a known phantom SB is used that includes inclusions of a number of distinct known and homogeneous materials. This phantom is scanned and reconstructed based on the projection raw data obtained in the scan, using, for instance, an iterative reconstruction algorithm, such as IBSIR (intensity based statistical iterative reconstruction) or other reconstruction algorithms, with one, two or three channels. The reconstruction algorithm is preferably three channel, but two or one channel embodiments are also envisaged.

Due to imperfections of, for example IBSIR and its inability to account for changes in the reference data, the reconstructed DF and PC images will suffer from artifacts. However, since the internal structure of the phantom SB is known, these artifacts can be eliminated using image processing (such as structure filtering) to obtain artifact reduced, "clean", reconstructed DF and/or PC imagery. For instance, a CAD (computer aided design) model of the phantom SB can be rigidly registered to the reconstructed images, respectively, and the reconstructed image values can then be replaced by ground truth values. Alternatively, within each of the homogeneous objects in the phantom SB, a mean value is computed and the image values in each homogeneous object is set to the so calculated mean value. The cleaned reconstructed DF and/or PC images (and the attenuation imagery, if any) can then be respectively projected forward to generate ground-truth target pre-processed projections which, together with the actually measured raw data, form pairs of training data for training a machine learning model, such as the CNN in Fig 3. The forward projections of the DF and PC images may be implemented as per eqs (2b),(2c). In one embodiment, forward model (2b) may be adapted to account for gradient sensitivities, such as by a weighted line integral model, with weighting 1/L as described in Applicant's US 9,761,021 B2 at eq(4), or similar. The cleaning operation thus results in each projection raw data frame $\lambda_i$ being associated

with three disentangled projections: $\lambda_i \text{--} > \lambda_\mu^i, \lambda_\delta^i \lambda_\varepsilon^i.$ The pairs for training image data may then be formed as

$\Lambda^i -> \lambda_\mu^i, \lambda_\delta^i \lambda_\varepsilon^i,$ with $\Lambda^i$ the phase stepping group for the phantom scan raw data and for a given direction $p_i$ as defined above in Fig 2B.

The sample body SB or phantom may be formed in any shape such as a cylinder. Other shapes are also envisaged. In embodiments a diameter of the cylindrical phantom corresponds to a size of the examination region. In embodiments, the diameter of cylindrical phantom SB is substantially flush with the inner lumen of the examination region. Preferably, the phantom SB comprises inclusions in any shape or size (such as ellipsoids or others) of several distinct materials such as material equivalent to water, fat, muscle, bone and a material of spongy structure to mimic diffusive properties of lung tissue. In embodiments, lumps of real animal lung tissue may be used, such as from pigs, suitably fixed. Other combinations of materials may be chosen instead. Preferably, however, the materials are so chosen that each creates a distinct, i.e. different from the other materials, set of signals for the three contrast mechanisms.

Reference is now made to Figure 5B which shows a training system TS for training the parameters, i.e. the weights of machine learning model such as in a convolutional neural network as discussed in Figure 3 or other. The training data comprises pairs $k$ of data $(x_k, y_k)$. The training data comprises for each pair $k$, training input data $x_k$ and an associated target $y_k$. The training data is thus organized in pairs $k$ in particular for supervised learning schemes as mainly envisaged herein. However, it should be noted that non-supervised learning schemes are not excluded herein.

The training input data $x_k$ may be obtained from historical image data acquired in the lab or previously in the clinic and held in image repositories. The targets $y_k$ or "ground truth" may represent examples of the above mentioned results of pre-processed projections, including the one, two or preferably three pre-processed projections from which artifact free images are constructible, substantially free of artifact caused by reference data variation during rotation. In embodiments, the training data is obtained as described at Figure 5A and may written as $(x_k, y_k) = ((\Lambda^i)_k, (\lambda_\mu^i, \lambda_\delta^i \lambda_\varepsilon^i)_k )$, with $i$ the respective projection direction, the phase stepping group $\Lambda$ defined for the projection raw data collected in the phantom scan. The index $k$ for the pairs in general corresponds to projection direction i.

In the training phase, an architecture of a machine learning model M, such as the shown CNN network in Fig 3 is pre-populated with initial set of weights. The weights $\theta$ of the model M represent a parameterization $M^\theta$, and it is the object of the training system TS to optimize and hence adapt the parameters $\theta$ based on the training data $(x_k, y_k)$ pairs. In other words, the learning can be formulized mathematically as an optimization scheme where a cost function $F$ is minimized although the dual formulation of maximizing a utility function may be used instead.

Assuming for now the paradigm of a cost function $F$, this measures the aggregated residue(s), that is, the error incurred between data estimated by the model M and the targets as per some or all of the training data pairs $k$:

$$argmin_\theta F = \sum_k || M^\theta(x_k) - y_k || \qquad (3)$$

In training, the training input data $x_k$ of a training pair is propagated through the initialized network M. Specifically, the training input $x_k$ for a $k$-th pair is received at an input IL, passed through the model and is then output at output OL as output training data $M^\theta(x)$. A suitable measure $\|.\|$ is used such as a $p$-norm, squared differences, or other, to measure the difference between the actual training output $M^\theta(x_k)$ produced by the model M, and the desired target $y_k$.

The output training data $M(x_k)$ is an estimate for target $y_k$ associated with the applied input training image data $x_k$. In general, there is an error between this output $M(x_k)$ and the associated target $y_k$ of the presently considered $k$-th pair. An optimization scheme such as backward/forward propagation or other gradient based methods may then be used to adapt the parameters $\theta$ of the model $M^\theta$ so as to decrease the residue for the considered pair $(x_k, y_k)$ or a subset of training pairs from the full training data set.

After one or more iterations in a first, inner, loop in which the parameters $\theta$ of the model are updated by updater UP for the current pair $(x_k, y_k)$, the training system TS enters a second, an outer, loop where a next training data pair $x^{k+1}, y^{k+1}$ is processed accordingly. The structure of updater UP depends on the optimization scheme used. For example, the inner loop as administered by updater UP may be implemented by one or more forward and backward passes in a forward/backpropagation algorithm. While adapting the parameters, the aggregated, summed, residues of all the training pairs are considered up to the current pair, to improve the objective function. The aggregated residue can be formed by configuring the objective function $F$ as a squared sum (or other algebraic combination) such as in eq. (3) of some or all considered residues for each pair.

Optionally, one or more batch normalization operators ("BN", not shown) may be used. The batch normalization operators may be integrated into the model M, for example coupled to one or more of the convolutional operator CV in a layer. BN operators allow mitigating vanishing gradient effects, the gradual reduction of gradient magnitude in the repeated forward and backward passes experienced during gradient-based learning algorithms in the learning phase of the model M.

The generalized training system as shown in Figure 5B can be considered for all learning schemes, in particular supervised schemes. Unsupervised learning schemes may also be envisaged herein in alternative embodiments. GPUs may be used to implement the training system TS.

Referring now to Figure 6A, this shows a method for generating training data. The training data can be used to train a machine learning model as described above.

At step S610 projection images are acquired by a tomographic X-ray apparatus XI configured for phase-contrast and/or dark-field imaging of a sample body resident in the examination region. In embodiments, the phantom SB is preferably as described above. The so acquired projection images form a first set of projection images.

At step S620, sample DF and/or PC imagery reconstructable from this first set of projection images can be image-processed based on prior knowledge of material type and geometry of the internal structures of the known phantom SB. Based on the image-processed DG and/or PC reconstructions, a second set of projection images is derived. The first set of projection images and the second set of projection images in association are then provided as training data for training a machine learning model.

In embodiments the step S620 for image processing the first set of projection images may be implemented as follows. In a sub-step of step S620, a phase-contrast and/or a dark-field reconstruction algorithm, such as an iterative reconstruction algorithm IBSIR, is used to reconstruct one or more dark-field and/or phase-contrast section images in image domain. These images will include artifacts due to the described fluctuations of reference phase and reference visibility. However, because the true structure of the phantom is known, image processing can be used to eliminate the artifacts the sectional images in image domain. For instance, a CAD model of the phantom SB can be rigidly registered to the reconstructed image and the reconstructed image values can then be replaced by ground truth values. Alternatively, within each of the homogeneous objects in the phantom SB, a mean value is computed and the image values in each homogeneous object is set to the calculated mean value. The so image-processed sectional DF and/or PC image, with artifacts eliminated, is then forward projected in step S630 to obtain the second set of, now disentangled, projection images which are now free of information that may otherwise cause artifacts in image domain due to the fluctuations of reference visibility and reference phase. The disentangled projection images for the DF and PC channel may then be paired up based on projection direction with an associated phase stepping group defined in the first set of projections to obtain pairs of training data.

Referring now to Figure 6B, this shows a flow chart of a method for training a machine learning model M based on training data, for example data as generated in the method of Fig 6A, or training data otherwise gathered from databases such as a PACS (A picture archiving and communication system) in a HIS (hospital information system).

At step S710 training data is received in the form of pairs $(x_k, y_k)$. The pair may be generated as described above at Fig 6A or may be otherwise procured. Each pair includes a training input $x_k$ and an associated target $y_k$.

At step S720, the projection imagery of a given phase stepping group is applied to an initialized machine learning model $M$ to produce a training output.

A deviation of the training output $M(x_k)$ from the associated target $y_k$ is quantified by a cost function $F$. One or more parameters of the model are adapted at step S730 in one or more iterations in an inner loop to improve the cost function. For instance, the model parameters are adapted to decrease residues as measured by the cost function.

The training method then returns in an outer loop to step S710 where the next pair of training data is fed. In step S720, the parameters of the model are adapted so that he aggregated residues of all pairs considered are decreased, in particular minimized. Forward-backward propagation or similar gradient-based techniques may be used in the inner loop.

More generally, the parameters of the model M are adjusted to improve an objective function $F$ which is either a cost function or a utility function. In embodiments, the cost function is configured to the measure the aggregated residues. In embodiments the aggregation of residues is implemented by summation over all or some residues for all pairs considered. The method may be implemented on one or more general-purpose processing units TS, preferably having processors capable for parallel processing to speed up the training.

The components of the training system TS, the training data generator TDG or the image processing system IPS including the projection image processor PP may be implemented as one or more software modules, run on one or more general-purpose processing units PU such as a workstation associated with the imager XI, or on a server computer associated with a group of imagers.

Alternatively, some or all components of the training system TS, the training data generator TDG or the image processing system IPS including the projection image processor PP may be arranged in hardware such as a suitably programmed microcontroller or microprocessor, such an FPGA (field-programmable-gate-array) or as a hardwired IC chip, an application specific integrated circuitry (ASIC), integrated into the imaging system XI. In a further embodiment still, the training system TS, the training data generator TDG or the image processing system IPS including the projection image processor PP may be implemented in both, partly in software and partly in hardware.

The different components of the training system TS, the training data generator TDG or the image processing system IPS including the projection image processor PP may be implemented on a single data processing unit PU.

Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims, be they numerals, alphanumerical, or a combination of one or more letters, or a combination of any of the foregoing, should not be construed as limiting the scope.

**Claims**

1. An image processing system (IPS) for supporting tomographic imaging, comprising:

an input interface (IN) for receiving, for a given projection direction ($p_i$), a plurality of input projection images at different phase steps acquired by a tomographic X-ray imaging apparatus configured for dark-field and/or phase-contrast imaging; and

a pre-trained machine learning component (MLC) to process the said plurality into output projection imagery that includes a dark-field projection image and/or a phase-contrast projection image for the said given projection direction.

2. System of claim 1, wherein the input projection images at the different phase steps are acquired by the tomographic X-ray imaging apparatus at respective different projection directions associated with the given projection direction.

3. System of claims 1 or 2, comprising a reconstructor (RECON) to reconstruct the output projection imagery in projection domain for a plurality of such given reference projection directions into reconstructed dark-field and/or phase contrast imagery in image domain.

4. System of any one of the preceding claims, wherein the machine learning component (MLC) has a neural network structure (M).

5. System of claim 4, wherein the neural network structure (M) includes at least in parts a convolutional neural network structure.

6. System of claim 4 or 5, wherein the network (M) includes at least one layer (IL, $L_1$-$L_m$), the said layer operable based on at least one 2D convolution filter.

7. System of one of the preceding claims 4-6, wherein the network (M) includes a sequence of hidden layers each operable based on respective one or more convolution filters.

8. System of claim 7, wherein outputs of the said sequence of layers is combined by a combiner layer (OL) into the said output projection imagery.

9. A training data generation system (TDG), configured to:

receive a first set of projection images ($\lambda$) of a sample body (SB) having known internal structures acquired from different projection directions by a tomographic imaging system configured for phase-contrast and/or dark-field imaging;

image-process imagery reconstructable from the first projection images based on knowledge of said structures to reduce artifacts,

forward project the image-processed imagery to obtain a second set of projection images ($\lambda$'), the first and second set forming training data.

10. A computer-implemented image processing method for supporting tomographic imaging, comprising:

receiving (S410), for a given projection direction, a plurality of input projection images at different phase steps acquired by a tomographic X-ray imaging apparatus configured for dark-field and/or phase-contrast imaging; and

processing (S420), by a machine learning component (MLC), the said plurality into output projection imagery that includes a dark-field projection image and/or a phase contrast projection image for the said mean projection direction.

11. Method of claim 10, wherein the input projection images at the different phase steps are acquired by the tomographic X-ray imaging apparatus at respective different projection directions associated with the given projection direction.

12. Method of any one of claims 10 or 11, comprising: reconstructing (S430) the output projection imagery in projection domain for plural such given projection directions into reconstructed dark-field and/or phase contrast imagery in image domain.

13. A computer-implemented method of generating training data, comprising:

receiving (S610) a first set of projection images of a sample body having known internal structures acquired from different projection directions by a tomographic imaging system configured for phase-contrast and/or dark-field imaging;

image-processing (S620) imagery reconstructable from the first projection images based on knowledge of said structures to reduce artifacts; and

forward project the image-processed imagery (S630) to obtain a second set of projection images, the first and second set forming training data.

14. A computer program element, which, when being executed by at least one processing unit (PU), is adapted to cause the processing unit (PU, TS. TDG) to perform the method as per claim 10-13.

15. A computer readable medium having stored thereon the program element of claim 14.

**FIG. 1**

EP 3 940 647 A1

RL

λ1

λ2

λ3

λ4

**FIG. 2A**

$\lambda_{i-1}$

$\lambda_i$

$\lambda_{i-2}$

$\lambda_{i+1}$

$\lambda_{i+2}$

$p_{i+2}$

$p_{i+1}$

$p_{i-2}$

$p_i$

$p_{i-1}$

l

**FIG. 2B**

**FIG. 3**

**FIG. 4**

**FIG. 5A**

**FIG. 5B**

λ

S610

S620

S630

λ'

**FIG. 6A**

S710

S720

S730

**FIG. 6B**

Europäisches
Patentamt

European
Patent Office

Office européen
des brevets

# EUROPEAN SEARCH REPORT

**Application Number**

EP 20 18 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU CHENGPENG ET AL: "Information retrieval in x-ray imaging with grating interferometry using convolution neural network", PROCEEDINGS OF SPIE; [PROCEEDINGS OF SPIE ISSN 0277-786X], SPIE, 1000 20TH ST. BELLINGHAM WA 98225-6705 USA, vol. 11072, 28 May 2019 (2019-05-28), pages 1107231-1107231, XP060123240, ISSN: 0277-786X, DOI: 10.1117/12.2534270 ISBN: 978-1-5106-3927-0 * the whole document * | 1-8, 10-12, 14,15 | INV. G06T11/00 |
| X | EP 3 629 294 A1 (SIEMENS HEALTHCARE GMBH [DE]) 1 April 2020 (2020-04-01) * paragraph [0051] * * figure 8 * | 9,13 | |

----- 

-----

**TECHNICAL FIELDS SEARCHED (IPC)**

G06T

The present search report has been drawn up for all claims

| Place of search | Date of completion of the search | Examiner |
|---|---|---|
| Munich | 11 January 2021 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 5827

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2021

| Patent document cited in search report | | Publication date | Patent family member(s) | Publication date |
|---|---|---|---|---|
| EP 3629294 | A1 | 01-04-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016207423 A1
- WO 2016207423 A
- US 9761021 B2

**Non-patent literature cited in the description**

- **T. M. MITCHELL.** Machine Learning. McGraw-Hill, 1997, 2